# NEUE EUROPÄISCHE PATENTSCHRIFT

(11) **EP 1 239 246 B2**
(45) Veröffentlichungstag und Bekanntmachung des Hinweises auf die Entscheidung über den Einspruch: **08.06.2011**
(45) Hinweis auf die Patenterteilung: 14.09.2005
(21) Anmeldenummer: 01117401.8
(22) Anmeldetag: 18.07.2001
(51) Int. Cl.: F25J 3/04

(54) **Verfahren und Vorrichtung zur Zerlegung eines Gasgemischs mit Notbetrieb**
Process and apparatus for separation of a gas mixture with failsafe operation
Procédé et dispositif de séparation d'un mélange de gaz avec système à sûreté

(30) Priorität: 09.03.2001 DE 10111428
(43) Veröffentlichungstag der Anmeldung: 11.09.2002
(73) Patentinhaber: Linde AG, 80331 München (DE)
(72) Erfinder: Zapp, Gerhard, 82049 Pullach (DE); Kunz, Christian, 81479 München (DE)
(74) Vertreter: Imhof, Dietmar

(56) Entgegenhaltungen:
- EP-A- 0 949 471
- EP-A- 1 031 804
- JP-A- 2000 146 431
- US-A- 3 191 393
- US-A- 3 721 097
- US-A- 3 901 673
- US-A- 6 155 079

## Beschreibung

Die Erfindung betrifft allgemein ein Verfahren zur Zerlegung eines Gasgemischs gemäß dem Oberbegriff von Patentanspruch 1. Ein derartiges Verfahren ist aus US 6155079 bekannt.

In derartigen Systemen können verschiedene Verdichtersysteme zur Verdichtung des Einsatzgases verwendet werden:
- Ein einziger Verdichter, beispielsweise mit mehreren aufeinander folgenden Stufen
- Zwei oder mehrere seriell verbundene separate Verdichter
- Zwei oder mehrere parallel geschaltete Verdichter
- Übergreifendes Gasverdichtungssystem, das nicht nur die Zerlegungsanlage, sondern weitere große Verbraucher versorgt (zum Beispiel Druckgassystem, insbesondere Druckluftnetz mit Verdichter-Schiene)

Bevorzugtes Anwendungsgebiet der Erfindung ist ein Tieftemperatur-Luftzerlegungs-Verfahren zur Versorgung eines integrierten Kraftwerksprozesses (IGCC - Integrated Gasifier Combined Cycle Process). Zur Energie-Erzeugung dient dabei ein Gasturbinen-System, das eine Gasturbine (Gasturbinen-Expander), einen von der Gasturbine angetriebenen Gasturbinen-Verdichter und eine Brennkammer aufweist. Ein oder mehrere Produkte der Luftzerlegung werden in dem Energie-ErzeugungsSystem eingesetzt. Beispielsweise kann im Luftzerleger erzeugter Sauerstoff zur Erzeugung eines Brenngases genutzt werden, mit dem die Brennkammer beschickt wird; hierbei dient der Sauerstoff insbesondere als Oxidationsmittel in einer Kohle- oder Schweröl-Vergasung. Alternativ oder zusätzlich kann Stickstoff aus dem Luftzerleger in den Gasturbinen-Strom eingeführt verwendet werden, indem er in die Brennkammer oder in die Gasturbine eingespeist oder mit dem Gasturbinen-Abgas zwischen Brennkammer und Gasturbine der Brennkammer vermischt wird. In manchen Fällen kann Stickstoff auch zur Förderung von Kohle in eine Synthesegasanlage verwendet werden.

Der Gasturbinen-Verdichter liefert einerseits die für den Verbrennungsprozess notwendige Luft und andererseits einen Teil der Einsatzluft für den Luftzerleger (den "ersten Einsatzgasstrom"); er stellt damit den "ersten Einsatzgasverdichter" im Sinne der Erfindung dar. Bei dem Verfahren der Erfindung wird ein anderer Teil der Einsatzluft für die Luftzerlegung (der "zweite Einsatzgasstrom") durch einen separaten Luftverdichter (den "zweiten Einsatzgasverdichter") komprimiert, der unabhängig von dem Gasturbinen-System angetrieben wird, beispielsweise mittels eines elektrischen Motors oder einer Dampfturbine. Das Verhältnis zwischen erstem und zweitem Einsatzluftstrom kann grundsätzlich jeden Wert annehmen. In der Praxis liegt es in der Regel bei 30 : 70 bis 70 : 30, vorzugsweise 40 : 60 bis 60 : 40.

Fällt die Gasturbine aufgrund einer Betriebsstörung aus, fehlt in kürzester Zeit die entsprechende Menge an Einsatzluft für den Luftzerleger. Mit dem Abfall von Luftmenge und Luftdruck fällt auch die Belastung der Rektifiziersäule(n) des Luftzerlegers ab, die Flüssigkeit (Holdup) fällt von den Böden beziehungsweise von der Packung nach unten und sämtliche Produktreinheiten gehen verloren. Bisher ist kein Verfahren bekannt, den Trennprozess im Luftzerleger nach einer derartigen Störung aufrechtzuerhalten. Der Weiterbetrieb der Verbraucher des Luftzerlegers, zum Beispiel der Vergasungsanlage, ist nur mit Hilfe einer externen Notversorgung mit teuren Drucktanks und Verdampfung flüssiger Produkte zeitlich begrenzt möglich.

Der Erfindung liegt daher die Aufgabe zugrunde, ein Verfahren zur Gaszerlegung der eingangs genannten Art anzugeben, das bei Ausfall eines der beiden Einsatzgasverdichter weiterbetrieben werden kann.

Diese Aufgabe wird durch die Merkmale des Anspruchs 1 gelöst.

Im Rahmen der Erfindung wird die Einsatzgasmenge, die aufgrund einer Störung im Verdichtersystem fehlt, mindestens teilweise durch einen Hilfsstrom aus einer anderen Quelle ersetzt. Auf diese Weise wird die Verminderung der Menge an Einsatzgas mindestens teilweise kompensiert und der Trennprozess (zum Beispiel eine Rektifikation) kann aufrechterhalten werden. Anschließend ist es möglich, die Zerlegungsanlage kontrolliert in einen Teillastbetrieb zu bringen und dabei die Hilfsstrommenge zu vermindern, gegebenenfalls bis auf Null.

Die Angabe "etwa" bedeutet bezüglich der Zusammensetzung des ersten Hilfsgases eine Abweichung des Anteils jeder Komponente von maximal 5 mol%, vorzugsweise maximal 1 mol%. Bei der Druckangabe werden durch "etwa" Abweichungen in der Größenordnung der Leitungs- und anderen Strömungsverluste zugelassen.

Die andere Quelle, aus welcher der Hilfsstrom kommt, kann beispielsweise die Zerlegungsanlage selbst sein. In diesem Fall wird im Störungsfall mindestens ein erster Produktstrom der Zerlegungsanlage in die Zerlegungsanlage zurückgeführt. Insbesondere dann, wenn das oder die Produkte ohnehin unter Druck erzeugt werden, kann der rückzuführende Produktstrom stromabwärts des vorhandenen Produktverdichters oder von einer Zwischenstufe des Produktverdichters entnommen, gegebenenfalls auf den Einsatzgasdruck (den "ersten Druck") entspannt und wieder der Zerlegungsanlage zugeführt, beispielsweise der oder einer Rektifiziersäule eines Luftzerlegers.

Damit wird zwar auch die Produktmenge vermindert (bei Totalausfall des Verdichtersystems kann die Zerlegungsanlage unter Umständen zunächst überhaupt kein Produkt mehr liefern), dieser Nachteil wird allerdings durch den praktisch störungsfreien Weiterbetrieb der Zerlegungsanlage mehr als wettgemacht. Bei entsprechendem Bedarf können die Verbraucher in der Zeit verminderter oder ausfallender Produktabgabe durch ein Notversorgungssystem (Backup-System) versorgt werden. Ein solches System weist beispielsweise eine Speichereinheit in Form mindestens eines Flüssigtanks und/oder eines Gasdruckspeichers auf. Die Speichereinheit kann von außerhalb der Zerlegungsanlage (zum Beispiels mittels Tankfahrzeugen oder Pipelines) und/oder durch im Normalbetrieb der Zerlegungsanlage erzeugtes Produkt gefüllt werden. Falls die Speichereinheit ohnehin unter einem Druck steht, die mindestens etwa gleich dem "ersten Druck" (dem Austrittsdruck des Verdichtersystems) ist, entfällt die Notwendigkeit für ein eigenes Druckerhöhungssystem für die Rückführung des entsprechenden Hilfsstroms in die Zerlegungsanlage.

Ist ein solches Notversorgungssystem vorhanden, kann ein dort erzeugter Notversorgungsstrom statt zu dem Verbraucher auch in die Zerlegungsanlage zurückgeführt werden, zusätzlich zu einem oder mehreren Produktströmen aus der Zerlegungsanlage.

Vorzugsweise werden bei,Ausfall oder Teilausfall des Verdichtersystems zwei Produktströme unterschiedlicher Zusammensetzung in die Zerlegungsanlage zurückgeführt, zum Beispiel ein Stickstoff-Strom und ein Sauerstoff-Strom im Falle der Luftzerlegung. Dadurch ist es im Rahmen moderner Prozessleittechnik möglich, die Zusammensetzung im Rückführstrom weitgehend dem Einsatzgas anzupassen. Im optimalen Fall werden sowohl die Gesamtmenge der rückgeführten Produktströme als auch deren relative Mengen so eingestellt, dass sie möglichst genau der fehlenden Einsatzgasmenge entsprechen. Damit hat der Ausfall des ersten Einsatzgasverdichters keine unmittelbare Auswirkung auf den Trennprozess - die Zerlegungsanlage spürt praktisch nichts von dieser gravierenden Betriebsstörung bei der Komprimierung des Einsatzgases. Selbstverständlich können die beiden rückgeführten Ströme ("Hilfsströme") auch teilweise oder vollständig durch Notversorgungsströme gebildet werden.

Bei Parallelschaltung eines ersten und eines zweiten Einsatzgasverdichters in dem Verdichtersystem wird die erfindungsgemäße Notschaltung insbesondere dann eingesetzt, wenn einer der beiden Einsatzgasverdichter ganz oder teilweise ausfällt. Dabei können die beiden Einsatzgasverdichter zwei Teilströme des Einsatzgases entweder über eine gemeinsame Leitung ansaugen, wobei diese gemeinsame Leitung beispielsweise ein Filter aufweist; alternativ kann der Eintritt jedes der beiden Einsatzgasverdichter mit einer eigenen Ansaugleitung verbunden sein, die unabhängig von der Ansaugleitung des anderen Einsatzgasverdichters ist.

Grundsätzlich ist es möglich, den oder die rückgeführten Hilfsströme separat in die Zerlegungseinrichtung - beispielsweise in eine Rektifiziersäule - einzuleiten. Günstiger ist es jedoch, wenn der zurückgeführte Produktstrom beziehungsweise die zurückgeführten Produktströme mit dem verdichteten zweiten Teilstrom des Einsatzgases vermischt und das Gemisch gemeinsam in die Zerlegungsanlage - beispielsweise in die Coldbox eines Luftzerlegers - eingeleitet wird. Die Vermischung kann stromaufwärts oder stromabwärts einer Reinigungseinrichtung für das Einsatzgas durchgeführt werden. Beispielsweise können der oder die rückgeführten Produktströme unmittelbar in eine Kühleinrichtung für das Einsatzgas - beispielsweise einen Direktkontaktkühler - eingeleitet werden.

Für die Verdichtung der zurückgeführten Produktströme werden vorzugsweise die Einrichtungen genutzt, die im ungestörten Betrieb zur Erzeugung des benötigten Produktdrucks dienen. Dabei kann es sich beispielsweise um einen mehrstufigen Gasverdichter handeln (Außenverdichtung) und/oder um eine Einrichtung zur Innenverdichtung, die eine Flüssigpumpe und Mittel zum Verdampfen des flüssig auf Druck gebrachten Produktstroms umfasst. Im Falle der Außenverdichtung wird der rückzuführende Produktstrom stromabwärts des Gasverdichters oder vom Austritt einer seiner Zwischenstufen abgezogen. Bei einer reinen Innenverdichtung erfolgt die Entnahme stromabwärts des Wärmetauschers zur Produktverdampfung, beispielsweise am warmen Ende eines Hauptwärmetauschers. Selbstverständlich können Innen- und Außenverdichtung bei demselben Produktstrom auch kombiniert werden. Im Falle einer Luftzerlegung wird häufig der Stickstoff außenverdichtet und der Sauerstoff wird einer Innenverdichtung unterzogen.

Ein wichtiges Anwendungsgebiet der Erfindung sind wie bereits gesagt - Luftzerlegungsanlagen, insbesondere Tieftemperatur-Luftzerlegungsanlagen. Dabei wird das Einsatzgas durch Luft, die Zerlegungsanlage durch eine Luftzerlegungsanlage und der zurückgeführte Produktstrom beziehungsweise die zurückgeführten Produktströme durch einen Stickstoff-Produktstrom und/oder durch einen Sauerstoff-Produktstrom gebildet und gegebenenfalls durch entsprechende Ströme aus einem Notversorgungssystem. Im Falle eines kryogenen Luftzerlegers umfasst die "Zerlegungsanlage" die gesamte Coldbox mit den Rektifiziersäule(n) zur Stickstoff-Sauerstoff-Trennung und dem Hauptwärmetauscher. Es handelt sich vorzugsweise um eine klassisches Linde-Doppelsäulen-Anlage. Die Erfindung kann aber auch bei anderen Zwei-Säulen-Verfahren, bei Ein-Säulen-Verfahren oder bei Verfahren mit drei oder mehr Säulen eingesetzt werden. Besonders vorteilhaft lässt sich die Erfindung bei Luftzerlegungs-Prozesse in Verbindung mit IGCC-Anlagen einsetzen, wie sie beispielsweise in DE 2434238, DE 2503193, Springmann, Linde-Berichte aus Technik und Wissenschaft, 51/1982 S.55-65, Rottmann, Schönpflug, Sauerstoffversorgung für Kohlevergasungs-Kraftwerke (Combined Cycle Process), BMFT-Forschungsbericht T 82-018, Beysel, Sommerfeld, VGB-Konferenz "Kohlevergasung 1991", 16.-17.05.1991, Dortmund, Lecture D1, EP 758733 B1, DE 19818308 A1, der nicht vorveröffentlichten deutschen Patentanmeldung 10052180 und den dazu korrespondierenden Anmeldungen sowie der nicht vorveröffentlichten deutschen Patentanmeldungen 10103968 und 10103957 und den dazu korrespondierenden Anmeldungen.

Grundsätzlich ist die erfindungsgemäße Produktrückführung bei jedem Gaszerlegungs-Prozess mit mindestens zwei parallel arbeitenden Einsatzgasverdichtem, insbesondere bei jedem Luftzerlegungs-Prozess mit mindestens zwei parallelen Luftverdichtern anwendbar. Darüber hinaus ist die Produktrückführung auch bei Zerlegungsprozessen mit einem einzigen Verdichter einsetzbar. Wenn dieser vollständig ausfällt, müssen jedoch zunächst die Gesamtproduktion zurückgeführt werden, das heißt es stehen keine Endprodukte für den oder die Verbraucher zur Verfügung. Dies kann aber unter Umständen dennoch sinnvoll sein, um die Zerlegungsanlage kontrolliert abzufahren oder in Betrieb (sozusagen im Leerlaufbetrieb) zu halten.

Die Erfindung betrifft außerdem eine Vorrichtung zur Gaszerlegung, insbesondere zur Tieftemperatur-Zerlegung von Luft, gemäß Patentanspruch 12.

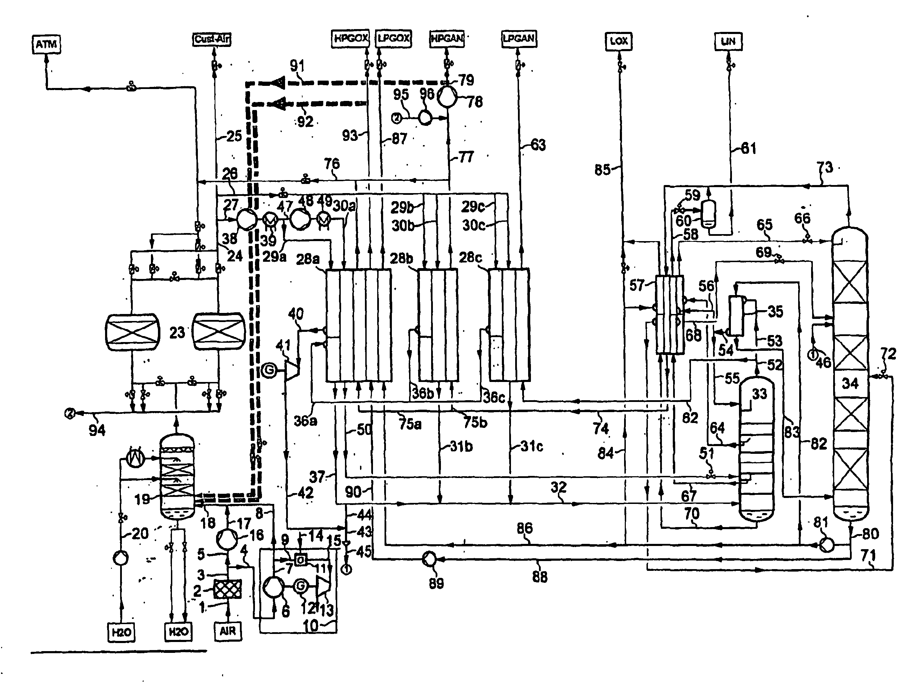

Die Erfindung sowie weitere Einzelheiten der Erfindung werden im Folgenden anhand eines in der Zeichnung dargestellten Ausführungsbeispiels näher erläutert. Das Beispiel betrifft eine Tieftemperatur-Luftzerlegungsanlage die zur Versorgung eines IGCC-Prozesses dient.

Einsatzluft strömt über eine gemeinsame Luftleitung 1, 3 durch ein Filter 2 zu und wird anschließend in einen ersten Teil 4 und einen zweiten Teil 5 aufgeteilt. Der erste Teil 4 wird in einem ersten Luftverdichter 6 auf einen ersten Druck von beispielsweise 10 bar gebracht. Der Luftverdichter ist Teil eines Gasturbinen-Systems 10, das außerdem eine Brennkammer 11, einen Generator 12 und einen Gasturbinen-Expander 13 aufweist, der den Generator 13 und den ersten Luftverdichter (Gasturbinen-Verdichter) 6 über eine mechanische Kopplung antreibt.

Von dem verdichteten ersten Teil 7 der Luft wird nur ein Teil 8 als Einsatzluft für den Luftzerleger verwendet und bildet den "ersten Teilstrom des Einsatzgases". Der Rest 9 strömt in die Brennkammer 11 und als Oxidationsmittel bei der Verbrennung eines Brenngases 14. Die Abgase 15 aus der Verbrennung werden in dem Gasturbinen-Expander 13 arbeitsleistend entspannt.

Der zweite Teil 5 der Luft bildet den "zweiten Teilstrom des Einsatzgases" und wird in einem zweiten Luftverdichter 16 auf denselben ersten Druck gebracht. Die beiden verdichteten Teilströme 8, 17 der Einsatzluft werden gemeinsam über Leitung 18 einem Direktkontaktkühler 19 zugeführt. In dem Beispiel werden der erste und der zweite Teilstrom jeweils durch etwa 50 % der Gesamtluftmenge gebildet, die durch Leitung 18 strömt. Die Verbrennungsluftmenge ist bei dieser Berechnung nicht berücksichtigt.

In dem Direktkontaktkühler 19 tritt die Einsatzluft in direktem Wärmeaustausch mit Wasser 20. Vom Sumpf des Direktkontaktkühler wird angewärmtes Wasser 21 abgezogen, oben tritt abgekühlte Luft 22 aus. Letztere wird einer Reinigungseinrichtung 23 zugeführt, welche in dem Beispiel aus einem umschaltbaren Paar von Molsieb-Adsorbern besteht. Ein kleiner Teil 25 der gereinigten Luft 24 wird als Instrumentenluft oder Druckluft zu einem Abnehmer (Cust-Air) abgezogen. Der Rest wird auf die Leitungen 26 und 27 aufgeteilt und strömt in die Coldbox (nicht dargestellt) der Zerlegungsanlage, genauer zum warmen Ende eines Hauptwärmetauscher-Systems, das in dem Beispiel aus drei Blöcken 28a, 28b, 28c besteht. Der Luftstrom 26 wird unter etwa dem ersten Druck (minus Leitungsverlusten) dem warmen Ende der Blöcke 28b und 28c zugeführt (Leitungen 29b, 29c, 30b, 30c). Ein Teil 31b, 31c durchströmt den Hauptwärmetauscher bis zum kalten Ende und wird schließlich über Leitung 32 gasförmig in die Hochdrucksäule 33 eines Rektifiziersystems eingeleitet, das außerdem eine Niederdrucksäule 34 und einen Kondensator-Verdampfer (Hauptkondensator) 35 aufweist. Ein anderer Teil 36b, 36c wird bei einer Zwischentemperatur oberhalb des kalten Endes aus den Hauptwärmetauscher-Blöcken 28b beziehungsweise 28c entnommen (36b, 36c) und als Ausgleichsstrom 36a dem anderen Block 28a an einer entsprechenden Zwischenstelle zugeführt, um dort bis zum kalten Ende abgekühlt und schließlich ebenfalls über die Leitungen 37 und 32 der Hochdrucksäule 33 zugespeist zu werden.

Der Luftstrom 27 wird in einem ersten Nachverdichter 38 mit Nachkühler 39 auf einen zweiten Druck gebracht, der höher als der erste Druck ist und beispielsweise 87 bar beträgt. Ein Teil 29a der auf den zweiten Druck verdichteten Luft wird im Block 28a des Hauptwärmetauscher-Systems auf eine Zwischentemperatur abgekühlt und über Leitung 40 einer Expansionsturbine 41 arbeitsleistend auf etwa den ersten Druck entspannt. Das aus der Turbine 41 austretende Zwei-Phasen-Gemisch wird einer Phasentrennung 43 unterworfen. Der gasförmige Anteil fließt über die Leitungen 44 und 32 in die Hochdrucksäule 33, die Flüssigkeit 45, 46 wird direkt in die Niederdrucksäule 34 eingeleitet.

Ein anderer Teil 47 der auf den zweiten Druck verdichteten Luft wird einem zweiten Nachverdichter 48 mit Nachkühler 49 auf einen noch höheren dritten Druck gebracht, beispielsweise 87 bar, und ebenfalls in den Block 28a eingeführt (30a). Er dient zur Verdampfung von flüssig auf Druck gebrachtem Sauerstoffprodukt und tritt in überkritischem oder flüssigem Zustand aus dem kalten Ende des Hauptwärmetauschers aus und wird in die Hochdrucksäule 33 entspannt (51).

Am Kopf der Hochdrucksäule 33 wird gasförmiger Reinstickstoff 52 abgezogen und mindestens zu einem ersten Teil 53 im Hauptkondensator 35 verflüssigt. Dabei entstandenes Kondensat 54 wird als Rücklauf 55 auf die Hochdrucksäule 33 aufgegeben beziehungsweise über Leitung 56, Unterkühlungs-Gegenströmer 57, Leitung 58, Drosselventil 59, Abscheider (Phasentrenneinrichtung) 60 und Leitung 61 als Flüssigprodukt (LIN) gewonnen. Ein Teil des gasförmigen Stickstoffs 52 vom Kopf der Hochdrucksäule 33 kann über Leitung 62, Hauptwärmetauscher-Block 28c und Leitung 63 direkt als Mitteldruckprodukt (LPGAN) abgezogen werden.

Die Rücklaufflüssigkeit 64 für die Niederdrucksäule 34 wird bei dem Ausführungsbeispiel von einer Zwischenstelle der Hochdrucksäule 33 abgenommen und auch Unterkühlung 57 über Leitung 65 und Drosselventil 66 auf den Kopf dieser Säule aufgegeben. Außerdem wird mindestens ein Teil der in 51 zwischenentspannten verflüssigten Luft über Leitung 67 wieder aus der Hochdrucksäule 33 entnommen, unterkühlt (57) und über Leitung 68 und Drosselventil 69 derselben Zwischenstelle der Niederdrucksäule 34 zugeführt, an der auch die flüssige Luft 46 aus der Turbine 41 eingeleitet wird. Flüssiger Rohsauerstoff 70 vom Sumpf der Hochdrucksäule 33 wird nach Unterkühlung 57 über Leitung 71 und Drosselventil 72 etwas weiter unten in die Niederdrucksäule eingespeist.

Der unreine Kopf-Stickstoff 73 aus der Niederdrucksäule 34 wird im Unterkühlungs-Gegenströmer 57 angewärmt und über die Leitungen 75a beziehungsweise 75b Block 28a beziehungsweise Block 28b des Hauptwärmetauscher-Systems zugeführt. Nach Anwärmung auf etwa Umgebungstemperatur wird ein Teil 76 des Niederdrucksäulen-Stickstoffs als Regeneriergas 77 für die Reinigungseinrichtung 23 verwendet beziehungsweise in die Atmosphäre abgeblasen (78). Ein anderer Teil wird, gegebenenfalls ergänzt durch feuchtes Regeneriergas 94, 95, das eine Rückverdichter 96 herangeführt wird, in einem Produktverdichter 78 auf den benötigten Produktdruck, zum Beispiel 24 bar, gebracht und über Leitung 79 als Hochdruckprodukt (HPGAN) abgezogen.

Das flüssige Sauerstoffprodukt 80 der Niederdrucksäule 34 dient vier verschiedenen Zwecken. Ein erster Teil 82 wird mittels einer Pumpe 81 zum Hauptkondensator 35 gefördert und dort gegen den kondensierenden Kopfstickstoff 53 der Hochdrucksäule 33 teilweise verdampft. Das im Verdampfungsraum des Hauptkondensators 35 gebildete Zwei-Phasen-Gemisch 83 wird in die Niederdrucksäule 34 zurückgeführt. Der gasförmige Anteil dient als aufsteigender Dampf in der Niederdrucksäule 34.

Ein zweiter und ein dritter Teil 84, 86 werden ebenfalls mittels der Pumpe 81 gefördert und anschließend - gegebenenfalls nach Unterkühlung in 57 über Leitung 85 als Flüssigprodukt (LOX) abgeführt, beziehungsweise dem Hauptwärmetauscher-Block 28a zugeleitet, dort verdampft und angewärmt und schließlich über Leitung 87 als gasförmiges Niederdruckprodukt (LPGOX) herausgeführt.

Ein vierter Teil wird durch Innenverdichtung auf einen sehr hohen Produktdruck von beispielsweise 81 bar gebracht, indem in einer weiteren Pumpe 89 ein entsprechend hoher Druck erzeugt wird und der überkritische Sauerstoff 90 in den Block 28a des Hauptwärmetauscher-Systems eingeführt und dort unter dem hohen Druck angewärmt wird. Der innenverdichtete Sauerstoff wird nach der Anwärmung über Leitung 93 als Hochdruckprodukt abgezogen.

Im Normalbetrieb der Anlage werden sämtliche Druckprodukte in vollem Umfang an die entsprechenden Verbraucher weitergeleitet, der Hochdruck-Sauerstoff 93 zum Beispiel zu einer oder mehreren Vergasungseinheiten, in welcher das Brenngas 14 erzeugt wird, und der Hochdruck-Stickstoff in die Brennkammer 14 oder in das Abgas 15 (nicht dargestellt). Fällt nun die Gasturbine aus, entfallen in extrem kurzer Zeit etwa 50 % der Einsatzluft 18 für den Luftzerleger. Erfindungsgemäß werden in diesem Augenblick entsprechende Anteil der Druckprodukte 79, 80 über die gestrichelt dargestellten Leitungen 91 beziehungsweise 92 in den Direktkontaktkühler 19 eingeleitet und ersetzen sofort die fehlende Luftmenge. Da die Drücke in den Produktleitungen 79, 93 höher als der Luftdruck (Betriebsdruck des Direktkontaktkühlers) sind, brauchen dafür keine Maschinen eingesetzt zu werden. Die Leitungen 91 und 92 müssen lediglich mit geeigneten Entspannungsarmaturen ausgestattet sein, die einen Druckstoß auf den Direktkontaktkühler 19 und die nachfolgende Reinigungseinrichtung 23 verhindern. Die Mengenregelung für die rückgeführten Produktströme 91, 92 kann zudem durch Druckregler begrenzt werden. Regelungstechnisch ist diese Notschaltung im Rahmen einer Ablaufsteuerung zu realisieren; sie wird durch einen Abfall in der Umdrehungsgeschwindigkeit des Gasturbinen-Expanders angestoßen.

**Tabelle 1:**

| Normalbetrieb (Design) | | | |
|---|---|---|---|
| Luftmenge | | HP-GOX | HP-GAN |
| 380.000 Nm3/h, | 10 bar >> | 81000 Nm3/h, 81 bar | 285000nm3/h, 24 bar |

**Tabelle 2:**

| Ausfall des Gasturbinen-Verdichters (GT-Trip) | | | |
|---|---|---|---|
| Luftmenge | | HP-GOX | HP-GAN |
| 190.000 Nm3/h | >> | 81000 Nm3/h | 285000 Nm3/h |
| 190.000 Nm3/h | << Rückfüh.<< | 41900 Nm3/h | 150900 Nm3/h |
| 380.000 Nm3/h | >> | 39100 Nm3/h | 134100 Nm3/h |

Alternativ können die rückgeführten Produktströme auch zwischen Kühleinrichtung 19 und Reinigungseinrichtung 23 in die Einsatzluftleitung eingespeist werden. Falls die Ströme trocken sind, kommt auch eine Vermischung mit der Einsatzluft stromabwärts der Reinigungseinrichtung 23 in Frage, etwa durch Einleitung in die Leitung 24.

Die rückgeführte Produktmenge steht selbstverständlich nicht mehr für die Verbraucher zur Verfügung Bezüglich des Stickstoffs bleibt dies ohne weitere Folgen, das die Gasturbine, in die dieser im Normalbetrieb geleitet wird, ohnehin außer Betrieb ist. Der Sauerstoff-Verbraucher, üblicherweise eine Vergasungseinheit, muss jedoch auf etwa halbe Last zurückgefahren werden. Beispielsweise kann bei einer zweisträngigen Vergasungseinheit zumindest einer der beiden Stränge weiterbetrieben werden. Dies erleichtert erheblich das Wiederanfahren der Gasturbine gegenüber einem Totalausfall.

Durch die Erfindung ergibt sich für den IGCC-Prozess, der im Ausführungsbeispiel den Verbraucher der Produkte der Luftzerlegungsanlage darstellt, eine deutlich verringerte Ausfallwahrscheinlichkeit. Damit sinken die Betriebskosten bei relativ geringem zusätzlichen Investitionsaufwand. Dies könnte dazu beitragen, der relativ umweltfreundlichen, aber störanfälligen IGCC-Technologie eine höhere Akzeptanz zu verleihen.

## Patentansprüche

1. Verfahren zur Zerlegung eines Gasgemischs in einer Zerlegungsanlage, bei dem Einsatzgas (18) in einem Verdichtersystem (6, 16) auf einen ersten Druck verdichtet wird und anschließend mindestens teilweise in die Zerlegungsanlage eingeleitet wird, in der im Normalbetrieb mindestens ein erster Produktstrom (91, 92) erzeugt wird, **dadurch gekennzeichnet, dass** bei Ausfall oder Teilausfall des Verdichtersystems (6, 16) ein erster Hilfsstrom, der etwa die Zusammensetzung des ersten Produktstroms oder etwa die Zusammensetzung des Einsatzgases aufweist, auf mindestens auf etwa den ersten Druck gebracht (78, 89) und in die Zerlegungsanlage zurückgeführt wird, wobei der Hilfsstrom mindestens teilweise durch den ersten Produktstrom (91, 92) gebildet wird.

2. Verfahren nach Anspruch 1, **dadurch gekennzeichnet, dass** der Hilfsstrom mindestens teilweise durch einen ersten Notversorgungsstrom gebildet wird, der einer Speichereinheit entnommen wird.

3. Verfahren nach einem der Ansprüche 1 oder 2, **dadurch gekennzeichnet, dass** bei Ausfall oder Teilausfall des Verdichtersystems (6, 16) ein zweiter Hilfsstrom, der durch einen zweiten Produktstrom (92) aus der Zerlegungsanlage und/oder durch einen zweiten Notversorgungsstrom aus einer Speichereinheit gebildet wird und eine andere Zusammensetzung als der erste Hilfsstrom (91) aufweist, mindestens auf etwa den ersten Druck verdichtet (89) und in die Zerlegungsanlage zurückgeführt wird.

4. Verfahren nach Anspruch 3, **dadurch gekennzeichnet, dass** die relativen Mengen der zurückgeführten Hilfsströme (91, 92) so eingestellt werden, dass ihr Gemisch etwa der Zusammensetzung des Einsatzgases (18) entspricht

5. Verfahren nach einem der Ansprüche 1 bis 4, **dadurch gekennzeichnet, dass** die absolute Menge des zurückgeführten Hilfsstroms beziehungsweise der zurückgeführten Hilfsströme (91, 92) so eingestellt wird, dass sie etwa gleich der Menge an Einsatzgas ist, um die der ersten Teilstrom (8) aufgrund des Ausfalls beziehungsweise Teilausfalls des Verdichtersystems (6, 16) vermindert ist.

6. Verfahren nach einem der Ansprüche 1 bis 5, **dadurch gekennzeichnet, dass** in dem Verdichtersystem ein erster Teilstrom des Einsatzgases in einem ersten Einsatzgasverdichter (6) und ein zweiter Teilstrom des Einsatzgases in einem zweiten Einsatzgasverdichter (16) verdichtet werden und sowohl der verdichtete erste Teilstrom (8) als auch der verdichtete zweite Teilstrom (17) mindestens teilweise in die Zerlegungsanlage eingeleitet werden, wobei bei Ausfall des ersten Einsatzgasverdichters (6) der Hilfsstrom beziehungsweise die Hilfsströme mindestens auf etwa den ersten Druck verdichtet (78, 89) und in die Zerlegungsanlage zurückgeführt wird beziehungsweise werden.

7. Verfahren nach einem Anspruch 6, **dadurch gekennzeichnet, dass** der zurückgeführte Hilfsstrom beziehungsweise die zurückgeführten Hilfsströme (91, 92) mit dem verdichteten zweiten Teilstrom des Einsatzgases vermischt werden.

8. Verfahren nach Anspruch 7, **dadurch gekennzeichnet, dass** die Vermischung mindestens eines Teils des zurückgeführten Hilfsstroms beziehungsweise der zurückgeführten Hilfsströme mit dem verdichteten zweiten Teilstrom des Einsatzgases stromaufwärts oder stromabwärts einer Reinigungseinrichtung (23) für das Einsatzgas durchgeführt wird.

9. Verfahren nach Anspruch 7 oder 8, **dadurch gekennzeichnet, dass** die Vermischung mindestens eines Teils des zurückgeführten Hilfsstroms beziehungsweise der zurückgeführten Hilfsströme mit dem verdichteten zweiten Teilstrom des Einsatzgases stromaufwärts, in oder stromabwärts einer Kühleinrichtung (18) für das Einsatzgas durchgeführt wird.

10. Verfahren nach einem der Ansprüche 1 bis 9, **dadurch gekennzeichnet, dass** die Verdichtung des zurückgeführten Hilfsstroms beziehungsweise der zurückgeführten Hilfsströme durch Innenverdichtung und/oder Außenverdichtung vorgenommen wird.

11. Verfahren nach einem der Ansprüche 1 bis 10, **dadurch gekennzeichnet, dass** das Einsatzgas durch Luft (1, 18), die Zerlegungsanlage durch eine Tieftemperatur-Luftzerlegungsanlage mit Coldbox und der zurückgeführte Hilfsstrom beziehungsweise die zurückgeführten Hilfsströme durch einen Stickstoff-Strom (73, 74, 77, 91) und/oder durch einen Sauerstoff-Strom (80, 88, 89, 90, 93, 92) gebildet werden, die als Produktströme aus der Luftzerlegungsanlage herausgeführt und/oder aus einer oder mehreren Speichereinheiten entnommen werden.

12. Vorrichtung zur Zerlegung eines Gasgemischs mit einem Verdichtersystem und einer Zerlegungsanlage, mit einer Einsatzgasleitung, die einen Austritt des Verdichtersystems mit einem Einlass der Zerlegungsanlage verbindet, mit einer Hilfsleitung (91, 92) zur Einleitung eines Hilfsstroms, der etwa die Zusammensetzung eines ersten Produktstroms der Zerlegungsanlage oder etwa die Zusammensetzung des Einsatzgases aufweist, in die Zerlegungsanlage und mit einer Regeleinrichtung zur Absperrung der Hilfsleitung im Normalbetrieb der Vorrichtung und zur Öffnung der Hilfsleitung (91, 92) bei Ausfall oder Teilausfall des Verdichtersystems (6, 16) und mit Mitteln zur Einleitung mindestens eines Teils des ersten Produktstroms in die Hilfsleitung stromaufwärts des Mittels zur Absperrung.

## Claims

1. Process for separating a gas mixture in a separating plant in which feed gas (18) is compressed to a first pressure in a compressor system (6, 16) and is then introduced at least in part into the separation plant in which, in usual operating mode, at least a first product stream (91, 92) is produced, **characterized in that** in the event of loss or partial loss of the compressor system (6, 16) a first auxiliary stream which has approximately the composition of the first product stream or approximately the composition of the feed gas is brought (78, 89) to at least approximately the first pressure and is recirculated to the separation plant, wherein the auxiliary stream is formed at least in part by the first product stream (91, 92).

2. Process according to Claim 1, **characterized in that** the auxiliary stream is formed in part by a first emergency supply stream which is taken off from a storage unit.

3. Process according to one of Claims 1 or 2, **characterized in that**, in the event of loss or partial loss of the compressor system (6, 16), a second auxiliary stream which is formed by a second product stream (92) from the separation plant and/or by a second emergency supply stream from a storage unit and has a different composition from the first auxiliary stream (91) is compressed (89) at least to approximately the first pressure and is recirculated to the separation plant.

4. Process according to Claim 3, **characterized in that** the relative rates of the recirculated auxiliary streams (91, 92) are set in such a manner that their mixture corresponds approximately to the composition of the feed gas (18).

5. Process according to one of Claims 1 to 4, **characterized in that** the absolute rate of the recirculated auxiliary stream, or recirculated auxiliary streams (91, 92), is set in such a manner that it is approximately equal to the rate of feed gas by which the first part-stream (8) is reduced owing to the loss or partial loss of the compressor system (6, 16).

6. Process according to one of Claims 1 to 5, **characterized in that**, in the compressor system, a first part-stream of the feed gas is compressed in a first feed gas compressor (6) and a second part-stream of the feed gas is compressed in a second feed gas compressor (16) and both the compressed first part-stream (8) and the compressed second part-stream (17) are introduced at least in part into the separation plant, in which case in the event of loss of the first feed gas compressor (6) the auxiliary stream, or the auxiliary streams, are compressed (78, 89) at least to approximately the first pressure and is or are recirculated to the separation plant.

7. Process according to Claim 6, **characterized in that** the recirculated auxiliary stream, or the recirculated auxiliary streams (91, 92) are mixed with the compressed second part-stream of the feed gas.

8. Process according to Claim 7, **characterized in that** the mixing of at least a part of the recirculated auxiliary stream, or the recirculated auxiliary streams, with the compressed second part-stream of the feed gas is carried out upstream or downstream of a purification device (23) for the feed gas.

9. Process according to Claim 7 or 8, **characterized in that** the mixing of at least a part of the recirculated auxiliary stream, or the recirculated auxiliary streams, with the compressed second part-stream of the feed gas is carried out upstream, in, or downstream of a cooling device (18) for the feed gas.

10. Process according to one of Claims 1 to 9, **characterized in that** the compression of the recirculated auxiliary stream, or the recirculated auxiliary streams, is performed by internal compression and/or external compression.

11. Process according to one of Claims 1 to 10, **characterized in that** the feed gas is formed by air (1, 18), the separation plant is formed by a cryogenic air separation plant including coldbox and the recirculated auxiliary stream, or recirculated auxiliary streams, are formed by a nitrogen stream (73, 74, 77, 91) and/or by an oxygen stream (80, 88, 89, 90, 93, 92) which are discharged from the air separation part as product streams and/or are taken off from one or more storage units.

12. Apparatus for separating a gas mixture having a compressor system and a separation plant, which apparatus has a feed gas line which connects an outlet of the compressor system to an inlet of the separation plant, an auxiliary line (91, 92) for introducing an auxiliary stream which has approximately the composition of a first product stream of the separation plant or approximately the composition of the feed gas into the separation plant, and a control device for shutting off the auxiliary line in the usual operating mode of the apparatus and for opening the auxiliary line (91, 92) in the event of loss or partial loss of the compressor system (6, 16) and having means for introducing at least some of the first product stream into the auxiliary line upstream of the means for shutting off.

## Revendications

1. Procédé de séparation d'un mélange de gaz dans une installation de séparation, dans lequel un gaz d'alimentation (18) est comprimé à une première pression dans un système de compresseur(s) (6, 16) et est ensuite introduit au moins en partie dans l'installation de séparation dans laquelle, en fonctionnement normal, au moins un premier écoulement de produit (91, 92) est créé, **caractérisé en ce qu'**en cas de défaillance ou de défaillance partielle du système de compresseur(s) (6, 16), un premier écoulement auxiliaire qui présente sensiblement la composition du premier écoulement de produit ou sensiblement la composition du gaz d'alimentation est amené au moins à la première pression (78, 89) et est recyclé dans l'installation de séparation, l'écoulement auxiliaire étant formé au moins en partie par le premier écoulement de produit (91, 92).

2. Procédé selon la revendication 1, **caractérisé en ce que** l'écoulement auxiliaire est formé en partie par un premier écoulement d'alimentation de secours qui est prélevé dans une unité de réserve.

3. Procédé selon l'une des revendications 1 ou 2, **caractérisé en ce qu'**en cas de défaillance ou de défaillance partielle du système de compresseur(s) (6, 16), un deuxième écoulement auxiliaire qui est formé d'un deuxième écoulement de produit (92) de l'installation de séparation et/ou d'un deuxième écoulement d'alimentation de secours en provenance d'une unité de réserve et qui présente une autre composition que le premier écoulement auxiliaire (91) est comprimé au moins à sensiblement la première pression (89) et est recyclé dans l'installation de séparation.

4. Procédé selon la revendication 3, **caractérisé en ce que** les quantités relatives des écoulements auxiliaires (91, 92) qui sont recyclés sont réglées de telle sorte que leur mélange présente sensiblement la composition du gaz d'alimentation (18).

5. Procédé selon l'une des revendications 1 à 4, **caractérisé en ce que** la quantité absolue de l'écoulement auxiliaire recyclé ou des écoulements auxiliaires recyclés (91, 92) est réglée de telle sorte qu'elle soit sensiblement identique à la quantité de gaz d'alimentation dont le premier écoulement partiel (8) a été privé à cause de la défaillance ou de la défaillance partielle du système de compresseur(s) (6, 16).

6. Procédé selon l'une des revendications 1 à 5, **caractérisé en ce que** dans le système de compresseur(s), un premier écoulement partiel de gaz d'alimentation est comprimé dans un premier compresseur (6) de gaz d'alimentation et un deuxième écoulement partiel du gaz d'alimentation est comprimé dans un deuxième compresseur (16) de gaz d'alimentation, tant le premier écoulement partiel (8) comprimé que le deuxième écoulement partiel (17) comprimé étant introduits au moins en partie dans l'installation de séparation, et en cas de défaillance du premier compresseur (6) du gaz d'alimentation, l'écoulement auxiliaire ou les écoulements auxiliaires sont comprimés au moins à sensiblement la première pression (78, 89) et sont recyclés dans l'installation de séparation.

7. Procédé selon la revendication 6, **caractérisé en ce que** l'écoulement de gaz recyclé ou les écoulements de gaz recyclé (91, 92) sont mélangés avec le deuxième écoulement partiel comprimé du gaz d'alimentation.

8. Procédé selon la revendication 7, **caractérisé en ce que** le mélange d'au moins une partie de l'écoulement de gaz recyclé ou des écoulements de gaz recyclé est réalisé avec le deuxième écoulement partiel comprimé du gaz d'alimentation en amont ou en aval d'un dispositif (23) de purification du gaz d'alimentation.

9. Procédé selon les revendications 7 ou 8, **caractérisé en ce que** le mélange d'au moins une partie de l'écoulement auxiliaire recyclé ou des écoulements auxiliaires recyclés avec le deuxième écoulement partiel comprimé du gaz d'alimentation est réalisé en amont, dans ou en aval d'un dispositif de refroidissement (18) du gaz d'alimentation.

10. Procédé selon l'une des revendications 1 à 9, **caractérisé en ce que** la compression de l'écoulement partiel recyclé ou des écoulements partiels recyclés est réalisée par compression interne et/ou compression externe.

11. Procédé selon l'une des revendications 1 à 10, **caractérisé en ce que** le gaz d'alimentation est formé d'air (1, 18), l'installation de séparation étant formée par une installation de séparation d'air à basse température dotée d'une boîte froide et l'écoulement partiel recyclé ou les écoulements partiels recyclés étant formés d'un écoulement d'azote (73, 74, 77, 91) et/ou d'un écoulement d'oxygène (80, 88, 89, 90, 93, 92) qui sont extraits en tant qu'écoulements de produit de l'installation de séparation d'air et/ou qui sont prélevés dans une ou plusieurs unités de réserve.

12. Dispositif de séparation d'un mélange de gaz, qui présente un système de compresseur(s) et une installation de séparation, avec un conduit de gaz d'alimentation qui relie une sortie du système de compresseur(s) à une entrée de l'installation de séparation, un conduit auxiliaire (91, 92) qui sert à introduire dans l'installation de séparation un écoulement auxiliaire qui présente sensiblement la composition du premier écoulement de produit de l'installation de séparation ou sensiblement la composition du gaz d'alimentation, et avec un dispositif de régulation qui bloque le conduit auxiliaire lorsque le dispositif fonctionne normalement et qui ouvre les conduits auxiliaires (91, 92) en cas de défaillance ou de défaillance partielle du système de compresseur(s) (6, 16) et avec des moyens pour introduire au moins une partie du premier écoulement de produit dans le conduit auxiliaire en amont du moyen de blocage.
